# EUROPÄISCHE PATENTANMELDUNG

(11) **EP 1 138 423 A1**
(43) Veröffentlichungstag der Anmeldung: **04.10.2001**
(21) Anmeldenummer: 01107217.0
(22) Anmeldetag: 23.03.2001
(51) Int. Cl.: B23D 15/00, B26D 1/09

(54) **Querteilscheren-Baueinheit zum Schopfen von Bändern**

(30) Priorität: 31.03.2000 DE 10016209
(71) Anmelder: SMS Demag AG, 40237 Düsseldorf (DE)
(72) Erfinder: Epskamp, Herbert, Dipl.-Ing., 40670 Meerbusch (DE); De Kock, Peter, Dipl.-Ing., 46117 Oberhausen (DE)
(74) Vertreter: Valentin, Ekkehard, Dipl.-Ing.

(57) **Zusammenfassung**

Bei einer Querteilscheren-Baueinheit zum Schopfen von Bändern, insbesondere Metallbändern, mit zwei übereinander angeordneten Schnittebenen, wird der Herstellungsaufwand ebenso wie die benötigten Bauteile verringert, wenn zwischen einem starren unteren und einem starren oberen Messerbalken ein beweglicher Messerbalken mit einem zu dem jeweiligen Schermesser der starren Messerbalken komplementären oberen und unteren Schermesser angeordnet ist.

## Beschreibung

Die Erfindung betrifft eine Querteilscheren-Baueinheit zum Schopfen von Bändern, insbesondere Metallbändern, mit zwei übereinander angeordneten Schnittebenen.

Bei der Produktion von breiten Bändern, Blechen oder dergleichen ist neben dem Besäumen der beiden Bandkanten, in der Regel mittels einander gegenüberliegenden Kreismesserscheren, weiterhin ein Querteilscheren zum Schopfen der Bandanfänge und -enden erforderlich. In Bandanlagen, die mit zwei Abhaspelgruppen arbeiten, von denen das Band vom Coil abgehaspelt und der weiteren Bandbehandlung zugeführt wird, ist es bekannt, zwei übereinander angeordnete Querteilscheren vorzusehen. Es steht somit für jede Bandlaufebene eine vollständige Schopfschere mit jeweils den gleichen Bauteilen und Antriebseinheiten zur Verfügung. Eine derartige Querteilschereneinheit mit im wesentlichen gleichen, in doppelter Ausführung vorliegenden Bauteilen ist relativ teuer und aufwendig.

Der Erfindung liegt daher die Aufgabe zugrunde, eine Querteilscheren-Baueinheit der eingangs genannten Art mit geringerem Aufwand und weniger Bauteilen zu schaffen.

Diese Aufgabe wird in verblüffend einfacher Weise dadurch gelöst, daß zwischen einem starren unteren und einem starren oberen Messerbalken ein beweglicher Messerbalken mit einem zu dem jeweiligen Schermesser der starren Messerbalken komplementären oberen und unteren Schermesser angeordnet ist. Indem somit lediglich ein beweglicher Messerbalken für beide Bandlauf- bzw. Schnittebenen genutzt wird, läßt sich ein ansonsten für eine zweite Schere benötigter kompletter Messerbalken mit Führungen und Antrieb einsparen.

Nach einem Vorschlag der Erfindung ist der bewegliche Messerbalken zu beiden Seiten neben den Schermessern geführt und wird von auf den Führungen oben und unten angeordneten Kraftmitteln beaufschlagt. Zur Führung eignen sich vorzugsweise Säulenführungen, auf denen vorteilhaft Kraftbeaufschlagungsmittel in Form von sich einerseits am oberen bzw. unteren Messerträger und andererseits am beweglichen Messerbalken abstützenden Federpaketen angeordnet sind. Die Säulenführungen erlauben es, die jeweiligen Schermesser des beweglichen Messerbalkens sauber mit dem gerade genutzten komplementären oberen oder unteren Schermesser der starren Messerbalken zum Schnitt zu bringen. Die Kraftbeaufschlagungsmittel bzw. Federpakete gewährleisten, daß der bewegliche Messerbalken nach dem jeweiligen Schnitt in eine gezielte Mittellage zurückgestellt wird.

Zum Hub des beweglichen Messerbalkens sind vorteilhaft außenseitig an den beweglichen Messerbalken angreifende Antriebsmittel vorgesehen. Als Antriebsmittel eignen sich hydraulische, direkt an den beweglichen Messerbalken angreifende Antriebszylinder oder zylinderbetätigte Kniehebel.

Es wird vorgeschlagen, daß dem beweglichen Messerbalken eine Gleichlaufführung zugeordnet ist. Diese, z.B. eine Gleichlaufwelle, gewährleistet den Gleichlauf der beidseitig wirkenden Antriebsmittel beim Heben oder Senken des beweglichen Messerbalkens.

Weitere Einzelheiten und Vorteile der Erfindung ergeben sich aus den Ansprüchen und der nachfolgenden Beschreibung eines in den Zeichnungen dargestellten Ausführungsbeispiels der Erfindung. Es zeigen:
- Fig. 1: in schematischer Vorderansicht eine Querteilscheren-Baueinheit mit zwei übereinander liegenden Bandlauf- bzw. Schnittebenen; und
- Fig. 2: als Einzelheit der Scheren-Baueinheit nach Fig. 1 in schematischer Vorderansicht den dort zwischen dem jeweils starren oberen und unteren Messerbalken angeordneten beweglichen Messerbalken mit einer von Fig. 1 abweichenden Ausführung der Antriebseinheit.

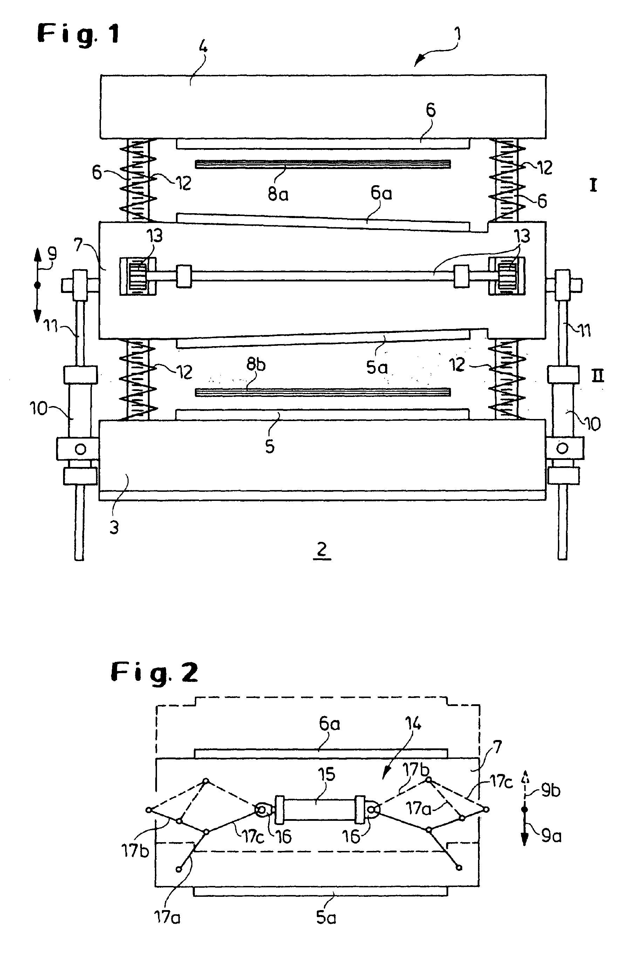

Eine in Fig.1 dargestellte Querteilscheren-Baueinheit 1 besitzt einen starren unteren, am Fundament 2 befestigten Messerbalken 3 und einen starren oberen Messerbalken 4. Diese sind jeweils mit einem Schermesser 5 bzw. 6 bestückt. Der untere Messerbalken 3 ist mit dem oberen Messerbalken 4 durch Säulen 6 verbunden, die gleichzeitig zur Aufnahme und Führung eines zwischen dem unteren und dem oberen Messerbalken 3, 4 angeordneten beweglichen Messerbalkens 7 dienen. Dieser weist ein zu dem jeweiligen Schermesser 5 bzw. 6 der starren Messerbalken 3, 4 komplementäres unteres und oberes Schermesser 5a bzw. 6a auf.

Die Querteilscheren-Baueinheit 1 stellt somit zwei Schnittebenen I bzw. II für ein von nicht gezeigten Abhaspelgruppen jeweils abzuwickelndes Band 8a bzw. 8b zur Verfügung. Die abgewickelten Bänder 8a, 8b werden somit in der mit den Schnittebenen I und II zusammenfallenden Bandlaufebene zum Schopfen der Bandanfänge und -enden durch die Querteilscheren-Baueinheit 1 hindurchgeführt.

Zum Schnitt des die obere Ebene I durchlaufenden Bandes 8a wird der bewegliche Messerbalken 7 angehoben, so daß die Schermesser 6a und 6 den Trennschnitt durchführen; das Schopfen bzw. Querteilen des die untere Ebene II durchlaufenden Bandes 8b geschieht durch Absenken des beweglichen Messerbalkens 7, so daß die dort zum Einsatz gebrachten komplementären Schermesser 5a bzw. 5 den Trennschnitt durchführen können. Die gegenläufige Hubbewegung des beweglichen Messerbalkens 7 wird durch den Pfeil 9 verdeutlicht.

Zum Durchführen des Trennschnitts, d.h. entweder Heben und Senken des beweglichen Messerbalkens 7, greifen im Ausführungsbeispiel nach Fig. 1 an den beiden Außenseiten des Messerbalkens 7 als Antriebsmittel hydraulische Antriebszylinder 10 an, die mit ihren Kolbenstangen 11 an den Messerbalken 7 angebunden und in ihrer Wirkrichtung umsteuerbar sind. Der bewegliche Messerbalken 7 wird sowohl von unten als auch von oben von als Federpakete 12 ausgebildeten Kraftmitteln beaufschlagt, die auf den Säulenführungen 6 angeordnet sind und dafür sorgen, daß der bewegliche Messerbalken 7 nach einem Schnitt jeweils wieder seine in Fig. 1 gezeigte Mitten- bzw. Ausgangslage zwischen dem oberen und unteren Messerbalken 3, 4 einnimmt. Eine Gleichlaufführung 13 sorgt dafür, daß sich der bewegliche Messerbalken 7 zum Schnitt und während der Bewegung verkantungsfrei anhebt bzw. absenkt.

Der als Einzelheit den Messerbalken 7 zeigenden Fig. 2 läßt sich ein alternatives Antriebsmittel 14 entnehmen. Ein in der Balkenmitte zentral angeordneter Zylinder 15 ist hier mit einerseits an seinen Zylinderaugen 16 und andererseits an den Messerbalken 7 angelenkten Kniehebeln 17a,b,c ausgebildet. Je nach Richtung der Beaufschlagung des Zylinders 15 wird der Messerbalken 7 abgesenkt, wie in Fig. 2 mit durchgezogenen Linien der Kniehebel 17a,b,c und dick ausgezogenem Richtungspfeil 9a verdeutlicht. Bei gegenläufiger Beaufschlagung des Zylinders 15 verstellen sich die Kniehebel 17a,b,c in die wie der Richtungpfeil 9b und der Messerbalken 7 durch Strichelung gezeigte angehobene Lage. Bei dieser Ausführung kann eine Gleichlaufführung entfallen.

In jedem Fall wird somit durch den beweglichen Messerbalken ermöglicht, daß ein Schopf- bzw. Querteilschnitt wechselweise in der oberen bzw. unteren Schnittebene I, II durchgeführt werden kann, ohne daß hierzu zwei separate Querteilscheren benötigt werden.

## Patentansprüche

1. Querteilscheren-Baueinheit zum Schopfen von Bändern, insbesondere Metallbändern, mit zwei übereinander angeordneten Schnittebenen,
**dadurch gekennzeichnet,**
**daß** zwischen einem starren unteren und einem starren oberen Messerbalken (3; 4) ein beweglicher Messerbalken (7) mit einem zu dem jeweiligen Schermesser (5, 6) der starren Messerbalken (3; 4) komplementären unteren und oberen Schermesser (5a; 6a) angeordnet ist.

2. Querteilscheren-Baueinheit nach Anspruch 1,
**dadurch gekennzeichnet,**
**daß** der bewegliche Messerbalken (7) zu beiden Seiten neben den Schermessern (5a; 6a) geführt ist und von auf den Führungen (6) oben und unten angeordneten Kraftmitteln (12) beaufschlagt ist.

3. Querteilscheren-Baueinheit nach Anspruch 2,
**gekennzeichnet durch**
Säulenführungen (6) mit darauf angeordneten, sich einerseits am oberen bzw. unteren Messerbalken (3, 4) und andererseits am beweglichen Messerbalken (7) abstützenden Federpaketen (12).

4. Querteilscheren-Baueinheit nach einem der Ansprüche 1 bis 3,
**gekennzeichnet durch**
außenseitig an den beweglichen Messerbalken (7) angreifende Antriebsmittel (10; 14).

5. Querteilscheren-Baueinheit nach Anspruch 4,
**gekennzeichnet durch**
hydraulische Antriebszylinder (10).

6. Querteilscheren-Baueinheit nach Anspruch 4,
**gekennzeichnet durch**
zylinderbetätigte Kniehebel (17a,b,c) als Antriebsmittel (14).

7. Querteilscheren-Baueinheit nach einem der Ansprüche 1 bis 6,
**gekennzeichnet durch**
eine dem beweglichen Messerbalken (7) zugeordnete Gleichlaufführung (13).
